(19)

**Europäisches Patentamt**

**European Patent Office**

**Office européen des brevets**

(11) **EP 4 557 169 A1**

(12) **EUROPEAN PATENT APPLICATION**

(43) Date of publication:
**21.05.2025 Bulletin 2025/21**

(21) Application number: **24167926.5**

(22) Date of filing: **29.03.2024**

(51) International Patent Classification (IPC):
**G06N 3/0499** (2023.01) **G06N 3/067** (2006.01)
**G06N 3/09** (2023.01)

(52) Cooperative Patent Classification (CPC):
**G06N 3/0499; G06N 3/0675; G06N 3/09**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.11.2023 CN 202311523851**

(71) Applicant: **Tsinghua University**
**Beijing 100084 (CN)**

(72) Inventors:
• **FANG, Lu**
  **Beijing, 100084 (CN)**
• **XUE, Zhiwei**
  **Beijing, 100084 (CN)**
• **ZHOU, Tiankuang**
  **Beijing, 100084 (CN)**

(74) Representative: **Manna, Sara et al**
**Società Italiana Brevetti S.p.A.**
**Piazza di Pietra, 39**
**00186 Roma (IT)**

(54) **METHOD AND APPARATUS FOR OPTICAL SYSTEM ONLINE DESIGNING BASED ON INTELLIGENT LIGHT COMPUTING**

(57) A method and an apparatus for optical system online designing based on intelligent optical computing are disclosed. The method includes: constructing an optical system based on a differentiable online neural network and mapping light propagation input data to the differentiable online neural network to obtain a network mapping result; training the online neural network based on the network mapping result and a fully-forward-mode to compute first light propagation output data of the optical system; computing an error field according to the first light propagation output data and application target data, and inputting the error field to the optical system in the fully-forward-mode to output second light propagation output data; and computing gradient information of an online neural network parameter, and updating the online neural network parameter to obtain a trained optical system parameter.

FIG. 2

EP 4 557 169 A1

**Description**

**TECHNICAL FIELD**

The present invention relates to the technical field of optoelectronic computing, and in particular to a method and an apparatus for optical system online designing based on intelligent optical computing.

**BACKGROUND**

An efficient and model-free design method has the potential to revolutionize the field of applied optics. However, the existing design method rely primarily on offline algorithms, which require significant computational resources and accurate numerical models.

Optical systems of different scales, ranging from free-space systems to integrated systems, are used in the fields of advanced imaging, neuromorphic computing, optical image processing, and the like. Their performance is critical. Traditionally, optical system design starts with developing an initialized analytical basic model and then optimizes it using intuitive or brute force based approaches. However, both approaches have limitations in terms of optimization space and efficiency. In recent years, substantial progress has been made in enhancing design efficiency and optimizing performance by using an inverse design. Unlike previous manual design, the inverse design starts with a specifying optimization target. This target-oriented method results in a more compact, more optimal optical device. However, the severe reliance on electronic calculations using brute force and target-directed optimization is problematic. As system complexity increases, analytical and numerical modeling becomes more time consuming and the computational resources required grow exponentially. Furthermore, perfectly accurate modeling of a general optical system is not possible due to imperfections in the system and complexity of light wave propagation, and there will always be a mismatch between an offline model and a real system.

To address challenges associated with numerical modeling, on-field design of a photonic system has begun to be explored since the late 1980s, particularly in the field of a photonic neural network. However, there is a challenge in achieving high accuracy and high efficiency simultaneously in parallel learning of a large-scale system. A perturbation-based optimization method is limited in efficiency. A more efficient gradient-based method is typically limited to small scale and simple problems due to a need for backward propagation of an optical field, which requires rigorous system calibration and alignment. There is also a hybrid method that combines on-field forward propagation with offline backward propagation, using an electronic computer to implement a gradient descent algorithm. However, there is still a need for accurate offline modeling in the backward propagation process, which is not always feasible in a universal optical system. No comprehensive solution has been found for the self-design of the optical system.

Technical challenges that hinder achieving model-free and fully online self-designing include the following: (1) there is no universal, differentiable optical system representation, due to the ubiquitous structure of optics, there is an urgent need for a unified parameterized form; (2) there is a conflict between system complexity and design efficiency/optimization. Fully implemented gradient descent training relies on backward propagation of the light field, but a reverse system has high complexity, making it difficult to scale and fully physically implement on a real-world problem.

**SUMMARY**

The present invention aims to solve, at least to a certain extent, one of the technical problems in the related art.

To this end, the present invention proposes a method for optical system online designing based on intelligent optical computing, by exploiting intrinsic parametric representations of electromagnetic wave propagation, the present invention establishes a connection between characteristics of a universal optical system and parameters of a on-field differentiable neural network, thereby mapping the optical design process to neural network learning in a physical system. The combination of spatial symmetry and Lorentz reciprocity ensures that data propagation and error propagation occur in a same physical medium and in a same direction, to calculate the optimal direction of refractive index and gain/loss of the optical system. Thus, during the design process, most of the design computation can be physically performed in parallel, thereby reducing the computational burden and reducing the constraints of numerical modeling.

Another object of the present invention is to propose an apparatus for optical system online designing based on intelligent light computing.

To achieve the above object, according to a first aspect of the present invention, there is provided a method for optical system online designing based on intelligent optical computing. The method includes:

constructing an optical system based on a differentiable online neural network and mapping light propagation input data to the differentiable online neural network to obtain a network mapping result;
training the online neural network based on the network mapping result and a fully-forward-mode, to compute first light propagation output data of the optical system;

computing an error field according to the first light propagation output data and application target data, and inputting the error field to the optical system in the fully-forward-mode to output second light propagation output data; and computing gradient information of an online neural network parameter based on the second light propagation output data, and updating the online neural network parameter according to the gradient information to obtain a trained optical system parameter, such that the trained optical system outputs data corresponding to the application target data to enable self-designing of the optical system.

The method for optical system online designing based on intelligent optical computing of embodiments of the present invention may also have the following additional technical features:

In an embodiment of the present invention, the optical system is constructed based on a free-space optical system and an integrated photonic system, in which the free-space optical system and the integrated photonic system each includes a corresponding modulation region and propagation region.

In an embodiment of the present invention, the application target data is obtained by:

obtaining first object data by focusing or imaging in an application target by constructing a wavefront by the free-space optical system;

obtaining second target data through neuromorphic computation in the application target by the integrated photonic system; and

obtaining the application target data according to the first target data and the second target data.

In an embodiment of the present invention, a complex refractive index of the optical system is:

$$(\text{RI}) \quad n = n_R + in_I$$

where the RI is the complex refractive index of the optical system, $n_R$ is a real part value of the complex refractive index of the optical system, $n_I$ is an imaginary part value of the complex refractive index of the optical system, the RI is kept fixed in the propagation region and the RI is electro-optically or all-optically reconstructed in the modulation region.

In an embodiment of the present invention, mapping the light propagation input data to the online neural network to obtain the network mapping result, includes:

mapping a reconfigurable modulation portion of the light propagation input data to a differentiable and modulatable weight unit in the online neural network to obtain a first mapping result;

mapping a light propagation portion of the light propagation input data to neuron connections between different layers in the online neural network to obtain a second mapping result; and

obtaining the network mapping result of the online neural network based on the first mapping result and the second mapping result.

In an embodiment of the present invention, mapping the light propagation input data to the online neural network to obtain the network mapping result, further includes:

re-parameterizing an optical system controlled based on Maxwell's equation $V \times V \times -\mu_0\epsilon_0\omega_0^2\epsilon_r)E = -j\mu_0\mu_r\omega_0 J$, where E is an electric field, $J$ is a current density, $\omega_0$ is an angular frequency, $\mu_0$ is a magnetic permeability of vacuum, $\mu_r$ is a magnetic permeability of a medium, $\varepsilon_0$ is a dielectric constant in vacuum, $\varepsilon_r$ is a dielectric constant of the medium, $V \times$ is a curl operator, through a real part and an imaginary part of a complex refractive index as a differentiable embedded photonic online neural network, the expression being:

$$y = W\left(n_R^{(0)}, n_I^{(0)}\right)\left(M(n_R^{(t)}, n_I^{(t)}) \cdot x\right)$$

where $x$ and $y$ are an input electric field and an output electric field, respectively, $W$ is a propagation characterized by a fixed refractive index $n_R^{(0)} + in_I^{(0)}$, and $M$ is a modulation region with a modulatable refractive index $n_R^{(t)} + in_I^{(t)}$.

To achieve the above object, according to a second aspect of the present invention, there is provided an apparatus for optical system online designing based on intelligent light computing. The apparatus includes:

a neural network mapping module, configured to construct an optical system based on a differentiable online neural network, and to map light propagation input data to the differentiable online neural network to obtain a network mapping result;

a first data computation module, configured to train the online neural network based on the network mapping result and a fully-forward-mode, to compute first light propagation output data of the optical system;

a second data computation module, configured to compute an error field according to the first light propagation output data and application target data, and to input the error field to the optical system in the fully-forward-mode to output second light propagation output data; and

a system design completion module, configured to compute gradient information of an online neural network parameter based on the second light propagation output data, and to update the online neural network parameter according to the gradient information to obtain a trained optical system parameter, such that the trained optical system outputs data corresponding to the application target data to enable self-designing of the optical system.

The apparatus for optical system online designing based on intelligent optical computing of embodiments of the present invention may also have the following additional technical features.

In an embodiment of the present invention, the neural network mapping module is further configured to construct the optical system based on a free-space optical system and an integrated photonic system, wherein the free-space optical system and the integrated photonic system respectively comprise a corresponding modulation region and a propagation region.

In an embodiment of the present invention, the neural network mapping module is further configured to: obtain first object data by focusing or imaging in an application target by constructing a wavefront by the free-space optical system; obtain second target data through neuromorphic computation in the application target by the integrated photonic system; and obtain the application target data according to the first target data and the second target data.

In an embodiment of the present invention, a complex refractive index of the optical system is:

$$(\text{RI}) \quad n = n_R + i n_I$$

where the RI is the complex refractive index of the optical system, $n_R$ is a real part value of the complex refractive index of the optical system, $n_I$ is an imaginary part value of the complex refractive index of the optical system, the RI is kept fixed in the propagation region and the RI is electro-optically or all-optically reconstructed in the modulation region.

In an embodiment of the present invention, the neural network mapping module is further configured to: map a reconfigurable modulation portion of the light propagation input data to a differentiable and modulatable weight unit in the online neural network to obtain a first mapping result; map a light propagation portion of the light propagation input data to neuron connections between different layers in the online neural network to obtain a second mapping result; and obtain the network mapping result of the online neural network based on the first mapping result and the second mapping result.

In an embodiment of the present invention, the neural network mapping module is further configured to: re-parameterize an optical system controlled based on Maxwell's equation $\nabla \times \ \nabla \times -\mu_0 \epsilon_0 \omega_0^2 \epsilon_r)E = -j\mu_0 \mu_r \omega_0 J$, where $E$ is an electric field, $J$ is a current density, $\omega_0$ is an angular frequency, $\mu_0$ is a magnetic permeability of vacuum, $\mu_r$ is a magnetic permeability of a medium, $\varepsilon_0$ is a dielectric constant in vacuum, $\varepsilon_r$ is a dielectric constant of the medium, $\nabla \times$ is a curl operator, through a real part and an imaginary part of a complex refractive index as a differentiable embedded photonic online neural network, the expression being:

$$y = W\left(n_R^{(0)}, n_I^{(0)}\right)(M(n_R^{(t)}, n_I^{(t)}) \cdot x)$$

where $x$ and $y$ are an input electric field and an output electric field, respectively, $W$ is a propagation characterized by a fixed refractive index $n_R^{(0)} + i n_I^{(0)}$, and $M$ is a modulation region with a modulatable refractive index $n_R^{(t)} + i n_I^{(t)}$.

According to the method and apparatus for optical system online designing based on intelligent light computing of the embodiments of the present invention, the optical system is separated into a design space and a propagation space, which can enable the optical system to be transformed into a parameterized on-field neural network and enable application target-directed self-designing, thereby eliminating the need for backward propagation in gradient descent training by exploiting spatial symmetry and Lorentz reciprocity.

Additional aspects and advantages of the present invention will be set forth in part in the description which follows, and in part will be obvious from the description, or will be learned by practice of the present invention.

**BRIEF DESCRIPTION OF THE DRAWINGS**

The above-mentioned and/or additional aspects and advantages of the present invention will become apparent and readily appreciated from the following description of embodiments, taken in conjunction with the accompanying drawings.

Fig. 1 is a flow chart of a method for optical system online designing based on intelligent optical computing according to embodiments of the present invention.
Fig. 2 is a schematic diagram of an intelligent optical computing-based optical system online designing according to embodiments of the present invention.
Fig. 3 is a diagram of a parallel FFM gradient descent verification of a deep optical neural network (ONN) according to embodiments of the present invention.
Fig. 4 is a diagram of high resolution imaging in a scattering medium by FFM self-designing according to embodiments of the present invention.
Fig. 5 is a diagram of performing self-designing parallel imaging and classification of a dynamic non-line-of-sight (NLOS) scene with FFM learning according to embodiments of the present invention.
Fig. 6 is a diagram of a self-designing photonic integrated circuit according to embodiments of the present invention.
Fig. 7 is a block diagram of an apparatus for optical system online designing based on intelligent light computing according to embodiments of the present invention.

**DETAILED DESCRIPTION**

It is noted that embodiments and features of embodiments of the present invention may be combined with each other without conflict. The present invention will be explained in detail below in connection with embodiments with reference to the accompanying drawings.

In order for those skilled in the art to better understand the aspects of the present invention, the embodiments of the present invention will now be clearly and fully described in combination with the accompanying drawings in embodiments of the present invention. It is apparent that the described embodiments are merely a part of, but not all of, embodiments of the present invention. Based on the embodiments in the present invention, all other embodiments obtained by a person of ordinary skill in the art without inventive step shall fall within the scope of protection of the present invention.

A method and an apparatus for optical system online designing based on intelligent optical computing according to embodiments of the present invention are described below with reference to the drawings.

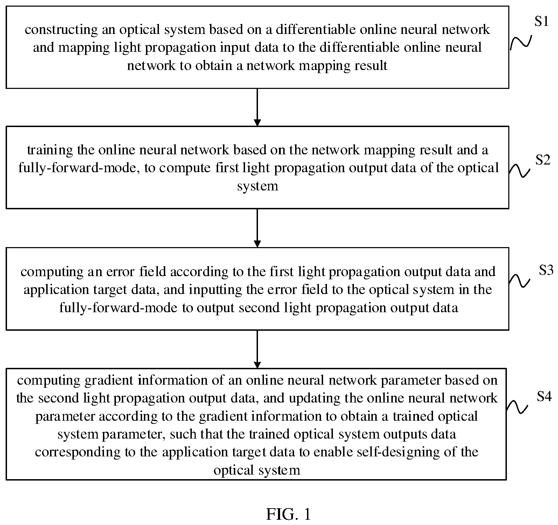

Figure 1 is a flow chart of a method for optical system online designing based on intelligent optical computing according to embodiments of the present invention.

As shown in FIG. 1, the method includes, but is not limited to, the following steps:

S1, constructing an optical system based on a differentiable online neural network, and mapping light propagation input data to the differentiable online neural network to obtain a network mapping result;
S2, training the online neural network based on the network mapping result and a fully-forward-mode, to compute first light propagation output data of the optical system;
S3, computing an error field according to the first light propagation output data and application target data, and inputting the error field to the optical system in the fully-forward-mode to output second light propagation output data; and
S4, computing gradient information of an online neural network parameter based on the second light propagation output data, and updating the online neural network parameter according to the gradient information to obtain a trained optical system parameter, such that the trained optical system outputs data corresponding to the application target data to enable self-designing of the optical system.

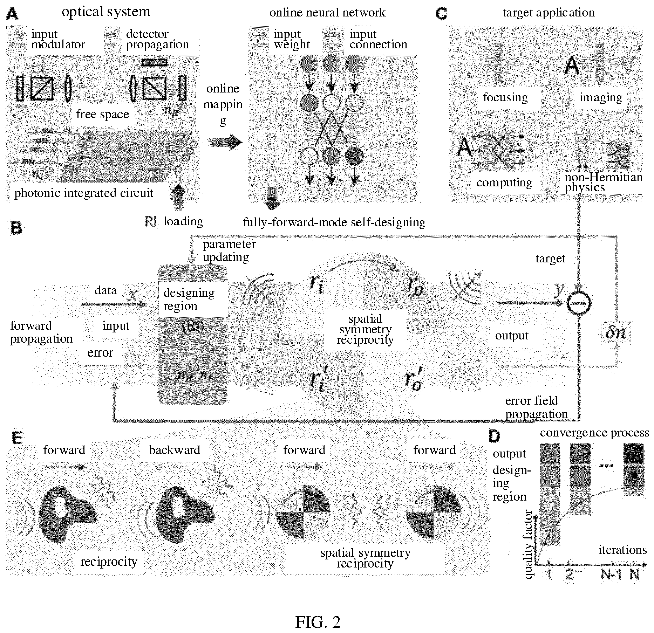

In one embodiment of the present invention, as shown in Fig. 2, the network architecture of the present invention includes a general optical system in part A in Fig. 2. The general optical system includes a free-space lens optical system and an integrated photonic system, both containing a modulation region and a propagation region that can be mapped to a differentiable online neural network. A reconfigurable modulation portion may be mapped to a differentiable and modulatable weight unit in the online neural network, and a light propagation portion may be mapped to neuron connections between different layers in the online neural network. In part B of Fig. 2, gradient descent is performed on the online neural network through fully-forward-mode (FFM) photonic learning, with a magnitude direction of the gradient guided by the application target, i.e., magnitude and direction changes of the reconfigurable modulation portion in the optical system, to bring the system to an output needed by the application target, thereby enabling the self-designing of the optical system (part C in Fig. 2). After the training process converges (part D in Fig. 2), designed real and imaginary indexes are deployed into the free-space system and the integrated photonic system, respectively. In part E of Fig. 2, a spatial symmetry reciprocity guarantees a fully-forward-mode propagation in the design process.

Specifically, the method of the present invention inputs data to forward propagate through the optical system, the error field is computed according to the output result and the target, the error field is propagated forward through the optical system, the gradient of the parameter is calculated according to the results of the two forward propagations, then the parameter is updated according to the gradient, and the above steps are repeated multiple times until the system parameter converges.

It can be understood that, although a complex non-magnetic optical system is characterized by refractive index, gain and loss, which means that the design of the optical system should include efficient optimization of the real and imaginary parts of the complex refractive index (RI) $n = n_R + in_I$. Depending on the modulability of the complex refractive index, the free-space system and the integrated photonic system can be divided into two distinct regions: a modulation region and a propagation region. As shown in part A of Fig. 2, in the propagation region, the RI remains fixed, while in the modulation region, the RI can be electro-optically or all-optically reconstructed for various functions (part C in Figure 2). The free-space optical system may perform focusing or imaging by constructing a wavefront, and the photonic integrated circuit system may be used for neuromorphic computation, studying non-Hermitian physics, and the like. By considering the modulation-propagation process in the context of modern machine learning, modulation coefficients and propagation characteristics correspond to neural network parameters and neuron connections, respectively, as shown on the right side of part A in FIG. 2. From this perspective, an optical system controlled based on Maxwell's equation (V × V ×

$-\mu_0\epsilon_0\omega_0^2\epsilon_r)E = -j\mu_0\mu_r\omega_0J$ , where $E$ is an electric field, $J$ is a current density, $\omega_0$ is an angular frequency, $\mu_0$ is a magnetic permeability of vacuum, $\mu_r$ is a magnetic permeability of a medium, $\varepsilon_0$ is a dielectric constant in vacuum, $\varepsilon_r$ is a dielectric constant of the medium, V × is a curl operator, can be re-parameterized through real and imaginary parts RI as a differentiable embedded photonic neural network, the expression being:

$$y = W\left(n_R^{(0)}, n_I^{(0)}\right)(M(n_R^{(t)}, n_I^{(t)}) \cdot x) \qquad (1)$$

where $x$ and $y$ are input and output electric fields, respectively, $W$ is a propagation characterized by a fixed refractive index $n_R^{(0)} + in_I^{(0)}$ , and M is a modulation region with a modulatable refractive index $n_R^{(t)} + in_I^{(t)}$ .

It will be understood that, gradient descent training of the neural network is crucial for artificial intelligence revival. The online implementation of the gradient descent algorithm speeds up the design of the optical system, resulting in higher goodness. However, accurate and efficient gradient computation involves forward and backward propagation. Performing backward propagation in the optical system is particularly challenging.

In one embodiment of the present invention, as shown in part C of Fig. 2, the embodiment of the present invention provides a fully-forward-mode gradient descent learning without backward propagation. The light propagation process in the optical system can be expressed by $y(r_o) = \int G(r_o,r_i)x(r_i)d(r_i)$, where $G(r,r')$ is the Green function characterizing the propagation of light in the equation (1). In the design of an optical system, it is a goal of embodiments of the present invention to modulate the optical system output y to the application target T that the optical system needs to complete by changing RI $n_R^{(t)}$ and $n_I^{(t)}$ . Further, $\delta_y$ is used to represent the error between the target and the optical system output. According to the backpropagation algorithm, the derivative of the error with respect to an optical system input field may be obtained by the error field of the optical system output light, i.e., $\delta_x(r_i) = \int G(r_o,r_i)\delta_y(r_o)d(r_o)$. In a linear optical system, Lorentz reciprocity holds, so $G(r_i,r_o) = G(r_o,r_i)$ (left side of part E in Fig. 2). Thus,

$$\delta_x(r_i) = \int G(r_i, r_o)\,\delta_y(r_o)\,d(r_o) \qquad (2),$$

which means to feed the error at the optical system output into the optical system and then propagate the field backwards to the optical system input end, the accuracy of which depends largely on the precise alignment between the forward and backward propagating optical fields, limiting the general design of the large-scale optical system that work in a complex scenario. In order to achieve gradient descent on an optical system with only forward propagation, equation (2) should be replaced by

$$\delta_x(r_o') = \int G(r_o', r_i') \, \delta_y(r_i') d(r_i') \tag{3}.$$

A sufficient condition that the equation (3) is valid is that integral factors are everywhere equal, i.e. for each pair of coordinates $(r_i, r_o)$, there is always a pair $(r_o', r_i')$ to make $G(r_o', r_i')\delta_y(r_i') = G(r_i, r_o)\delta_y(r_o)$, and there is a one-to-one correspondence between $r_i$ and $r_o'$ and $r_i'$ and $r_o$. Embodiments of the present invention observe that this condition is satisfied in a spatially symmetric system (right side of part E in FIG. 2). In a system $\sigma_v$ with mirror symmetry, $G(r_i, r_o) = G(\sigma_v(r_i'), \sigma_v(r_o))$, let $(r_o', \ r_i') = (\sigma_v(r_i), \ \sigma_v(r_o))$, the embodiment of the present invention obtains $\delta_x(r_o') = \int G(r_o', r_i')\delta_y(r_i')d(r_i')$, this is the equation (3), and which means to feed the error field at the input end and measure a propagating field of the feeding at the output end. Rotational symmetry also satisfies this condition. Then the output of the error propagation is used to calculate the gradient with respect to RI. After the RI of the design area converges, the system is deployed to implement the target application.

It will be understood that, spatial symmetry is inherent in many optical systems. In the free-space optical system, both optical imaging and processing system involve a plane of symmetry, where optical path distances to and from this plane are symmetrical. In the photonic integrated circuit system, a topology of structures, including spatially symmetric patterns, can be modulated by nanofabrication. In the design process, the design system is provided with data and a target pair.

In one embodiment of the present invention, part D in Fig. 2 illustrates the design of a free-space training system for focusing an input beam. The complex fields of the data and the error are projected on the wavefront modulator and then fed into the symmetric system. The output complex field is measured by interference of the output light with a reference beam. After applying FFM learning, goodness gradually increases and finally converges. The designed phase distribution gradually approaches the parabolic wavefront, so that the output converges to a compact focus point.

In one embodiment of the present invention, the embodiment of the present invention shows self-designing of the real part RI $n_R$ implementing the free-space optical system, as well as self-designing of the imaginary part RI $n_I$ of the integrated photonic system. First, according to the embodiment of the present invention, the capability of the method is evaluated by applying it to a deep optical neural network with million parameters for image classification, and a reasonable correspondence between gradient computations obtained for experimental and simulated data is observed. Since the FFM learning is able to model the system online, it has the ability to adaptively correct a wavefront distortion, enabling compact focusing even with a scattering medium that is difficult to model accurately. Therefore, the method of embodiments of the present invention improves the resolution of scatter imaging, which approaches the limit of free-space resolution. By exploiting intrinsic optical symmetry, the FFM learning is particularly useful in a non-line-of-sight system. It enables all-optic imaging and classification of sensorless dynamic invisible objects at the speed of light with only one received photon per detection pixel.

In one embodiment of the present invention, the embodiment of the present invention also illustrates the universality of the method to the photonic integrated circuit system, which allows the creation of a scalable photonic integrated neural network and a model-free non-Hermitian structures. In particular, the method of embodiments of the present invention scales the network size to 32 times its physical kernel and finds outliers in case of an ambiguous Hamiltonian prior.

Further, embodiments of the present invention also perform parallel FFM gradient descent verification of the deep optical neural network.

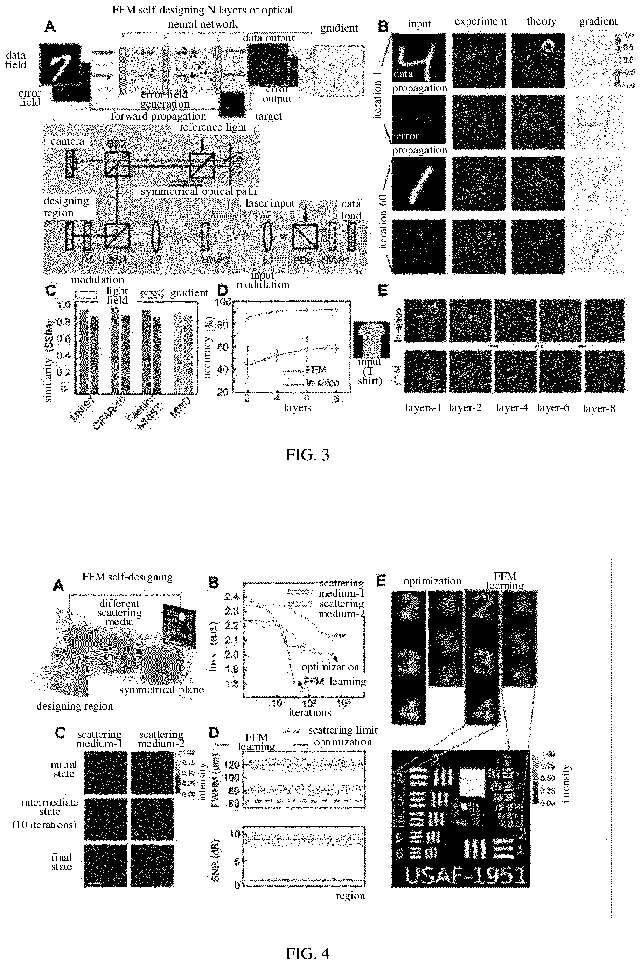

Fig. 3 shows the parallel FFM gradient descent verification of the deep optical neural network (ONN), part A in Fig. 3 is a deep free-space ONN and an experimental system; par B in Fig. 3 is a comparison of experimental measurement with analytical simulation; part C in Fig. 3 is a structural similarity index between the experimental and simulated results; part D in Fig. 3 is FFM and simulation-based multilayer ONN design, in which error bar length represents twice the standard deviation; part E in Fig. 3 is a comparison of each layer output of an eight-layer ONN designed using FFM learning with simulation-based optimization. Further, as shown in Fig. 3, P1 is a polarizer; BS1/BS2 are beam splitters; PBS is a polarizing beam splitter; L1/L2 are lens; HWP1/HWP2 are half wave plates. The scale bar of the figure is 1 mm.

Part A in Fig. 3 illustrates the self-training process of a multi-layer free-space optical neural network (ONN) using FFM learning for optical image processing. The computation operation in each layer of the ONN includes two phases: an optical modulation in the design region and a fixed free-space propagation. Taking advantage of the symmetry of free-space propagation, the FFM method is used to optimize an effective refractive index of a liquid crystal in the spatial modulator. The liquid crystal operates in pure phase mode, so the optimization is essentially performed on the real part of the effective RI $n_R$. Specifically, during the design process, the data field is propagated through the physical system. The output obtained from this data propagation is compared to the target output, to generate error fields. These error fields are then forward propagated in the symmetric system to obtain an error field output. The gradient for each design layer is computed using the data input and error output. The spatial symmetry reciprocity is verified by two-step propagation before FFM learning was performed. The experimental setup is shown in the bottom of part A in FIG. 3, and the system achieves layer-by-layer data and error propagation with a propagation distance of 0.388 meters and a number of optical neurons of 160,000 (400×400). The complex output optical field detects the complex optical field and reduces phase information using phase-shifting holography by interfacing the signal beam with the reference beam. In the error propagation, the parameter of each layer is loaded in reverse order.

To demonstrate the effectiveness of FFM learning, embodiments of the present invention optimize a single layer neural network for object classification using a reference dataset (i.e., MNIST, CIFAR-10, Fashion-MNIST, and MWD). The evolution of a training loss and a phase parameter converges over 60 training cycles. Par B in FIG. 3 visualizes the training result on the MNIST dataset, in which the theoretical output light field is shown in a third column. A structural similarity index (SSIM) is used to quantify a similarity between the experimental and theoretical results. As shown in part C in Fig. 3, the SSIM index exceeds 0.97, indicating high similarity. The gradient shown in a fourth column of part B in Fig. 3 has a SSIM index greater than 0.89. Notably, due to a systematic defect, the theoretical results of the light field and the gradient may not accurately represent physical results, particularly as the number of layers increases. Therefore, the theoretical result is only a reflection of the true physical quantity and thus should not be considered entirely as a true value.

The significant accuracy and efficiency of FFM learning enables the self-design of a very large scale photonic neural network. Previously, limitations in modeling accuracy and system deficiency limited the depth of most free-space photonic neural networks to three layers. Attempts to increase network depth can lead to system noise accumulation and task performance degradation. In this study, a multi-layer diffraction neural network that classifies using the Fashion-MNIST dataset is investigated in embodiments of the present invention (part D in Fig. 3). By increasing the number of layers from two to eight, the average accuracies of experimental test results based on simulation trained networks are observed to be 44.0%, 52.4%, 58.4%, and 58.8% in the embodiments of the present invention. These results are significantly lower than the theoretical accuracies, being 92.2%, 93.8%, 96.0%, and 96.0%, respectively. Notably, as shown in part D in Fig. 3, the test performance of the neural networks trained based on simulations exhibits a high uncertainty, with standard deviations in test accuracy rates of about 35.1%, 8.8%, 18.4%, and 5.5%, respectively, which correspond to 2, 4, 6, and 8 layers of neural networks, respectively. However, by performing FFM learning, the network performance is significantly improved to 88.6%, 92.0%, 94.0%, and 94.2%, approaching theoretical simulation accuracy. Part E in Fig. 3 illustrates the output of an eight layer neural network. Comparing the output of the FFM designing neural network, the output of the theoretical simulation design, and the experimental output, it is evident that as the number of layers increases, the experimental output gradually deviates from the target output, and eventually misclassifying the object. In contrast, the FFM designing network can accurately classify.

Further, embodiments of the present invention also systematically design self-designing all-optic imaging and processing in a complex scene.

High resolution imaging is achieved in a scattering medium by FFM self-design as shown in Fig. 4. Part A of Fig. 4 shows that the symmetry of the light propagation with respect to a central plane of a complex medium facilitates FFM design focusing through the scattering medium. Part B of Fig. 4 shows a focusing effect using FFM learning and PSO optimization design. Part C of Fig. 4 shows an evolution process of FFM design focusing with different scattering media. Part D of Fig. 4 shows a full width at half maximum (FWHM) and peak signal-to-noise ratio (PSNR) of uniformly sampled focus points designed respectively by FFM and PSO, within a design area of 3.2 mm × 3.2 mm. Part E of Fig. 4 shows imaging resolution calibration on USAF resolution map. Further, as shown in Fig. 4, a.u. is arbitrary unit. The scale bar of the figure is 1 mm.

Because FFM learning occurs on an original physical system, it overcomes the limitations imposed by offline numerical modeling, simplifies the design of the complex photonic system, and eliminating the need for exhaustive calibration and modeling. Part A in Fig. 4 illustrates an implementation of a point scanning scatter imaging system. An input wavefront covers an area of 3.2 mm × 3.2 mm, and is divided into 400 × 400 pixels, and is simultaneously optimized for realizing focused imaging through the scattering medium. Subsequently, the designed focus point is used to achieve point scanning of an object located outside the scattering medium. To evaluate the performance of the FFM method in the complex system, the symmetric scattering medium is used here to ensure that the data (plane wave) propagation and error propagation paths remain equivalent.

Traditionally, in adaptive optics, heuristic optimization methods have been used to optimize the focus point. In this study, embodiments of the present invention analyze different recent optimization methods and use particle swarm optimization (PSO) (part B of Fig. 3) for comparison. Two different types of scattering media, random phase plate (referred to as "scattering medium-I") and tape (referred to as "scattering medium-II"), are used to evaluate the performance. The gradient-based FFM method exhibits higher efficiency, and converges after 25 design iterations in both experiments, with convergence loss values of 1.84 and 2.07, respectively. In contrast, the PSO method requires at least 400 design iterations to converge, with final loss values of 2.01 and 2.15, respectively. Therefore, the PSO method is more than 10 times slower than FFM learning, and the focusing ability is poor. The evolution of FFM self-design is shown in part C in Fig. 4, which shows that initially randomly distributed intensity profiles gradually converge into a tight spot. Subsequently, the focus of the design is learned over the entire 3.2 mm × 3.2 mm imaging area. The full width half maximum (FWHM) and peak signal-to-noise ratio (PSNR) indexes of the FFM and PSO optimized focus points are compared. As shown in part D of Fig. 4, by using the FFM method, the average FWHM is 81.2 microns, the average PSNR is 8.46 dB, and the minimum FWHM is 65.6 microns. With 3.2 mm wide aperture and 0.388 m propagation distance, the focus point of the FFM design is close to the free-space diffraction limit of 64.5 microns. In contrast, the PSO optimization results in a FWHM of 120.0 microns and a PSNR of 2.29 dB.

The embodiments of the present invention then evaluate the scanning performance of the designed focal spot array on a resolution map located behind the scattering medium (part E of Fig. 4). When scanning using the PSO optimized scan points, numbers with a width of 238.7 microns can only be ambiguously classified (left portion), while numbers with a width of 145.6 microns are completely obscured. In contrast, the scan focus optimized using FFM has an ability to resolve pairs of lines with a separation distance as small as 56.0 microns and a line width of 64.0 microns (right portion of part E in Fig. 4), which is consistent with the resolution limitation of the imaging configuration.

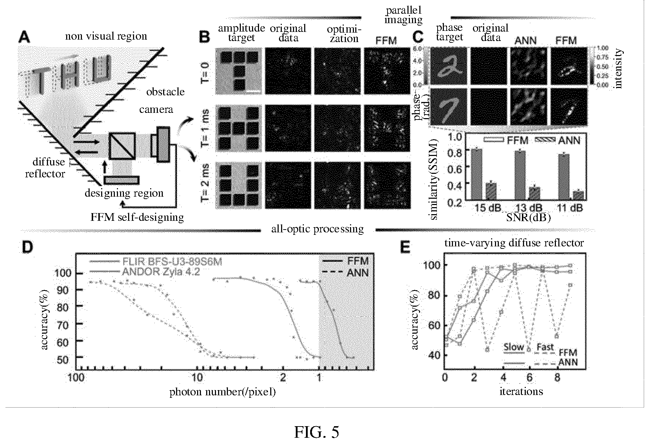

Fig. 5 shows performing self-design parallel imaging and classification of a dynamic non-line-of-sight (NLOS) scene using FFM learning. Part A in Fig. 5 is a FFM learning system setup. Part B and Part C in Fig. 5 are parallel imaging of a dynamic chromium target (part B) and a phase target (part C) in the NLOS region. Part D in Fig. 5 is a all-optic NLOS process with high photon efficiency. Part E in Fig. 5 is efficient FFM learning for a time-varying diffuse reflector. The scale bar of the figure is 1 mm.

With online FFM learning, embodiments of the present invention provide a valuable tool for designing an unconventional imaging mode, especially where accurate modeling is not possible, such as non-line-of-sight (NLOS) imaging. In the NLOS imaging, objects are hidden in corners and invisible to the observer. Typically, the complexity of the physical model requires a heuristic raster scan in the scene to design focus points, which is very time consuming. However, the optical path of the hidden object exhibits spatial symmetry in the NLOS propagation model (part A in Fig. 5). With this symmetry, the FFM method can optimize the wavefront, enabling on-field reconstruction and analysis of the hidden objects, all results can be generated all-optically on the detection plane. The FFM learning method enables dynamic NLOS imaging and processing through parallel inference on the hidden objects.

Part B of Fig. 5 illustrates that the non-line-of-sight (NLOS) object plane is divided into one $3\times3$ square. In the learning process, the input wavefront is designed to project all squares simultaneously to their target locations. Thus, hidden objects are recovered at the same time. The embodiments of the present invention use targets "T", "H" and "U" made of hidden chromium material in the shape of letters. The embodiments of the present invention herein set an exposure time to 1 millisecond and an optical power to 0.20 milliwatts, enabling the sensor to image in real time as the target traverses the field of view. Without the FFM designed wavefront, the generated images are severely distorted (a "raw" column). Although PSO optimization improves the signal strength (a third column of part B in Fig 5), the objects remained difficult to be recognized, which is represented by an average SSIM of 0.36. In contrast, the FFM-designed wavefront accurately recovers the shape of all three letters, with a SSIM of 1.0 for each target. Furthermore, in part C in Fig. 5, the embodiments of the present invention illustrate the application of phase image imaging using FFM learning with a resolution of $28\times28$. Together with FFM learning, the same task is also trained with an Artificial Neural Network (ANN), using four handwritten digits for learning. At the bottom of part C in Fig. 5, the embodiments of the present invention compare the structural similarity between the restored and original images at different signal-to-noise ratio (SNR) levels. At an SNR of 15 dB, the FFM method achieves an SSIM index of 0.81, while the ANN only achieves an SSIM index of 0.40.

Besides having dynamic imaging capabilities, the FFM learning method can also be used for all-optic classification of hidden objects within the NLOS region. The embodiments of the present invention compare FFM learned NLOS reflection signal classification performance with state-of-the-art ANN Res-Net. In order to evaluate the photon efficiency of the system, the embodiments of the present invention configure it to classify the MNIST dataset using a different number of incident photons on each sensor pixel. The embodiments of the present invention also vary the readout noise by using a low noise sCMOS sensor (Andor Zyla 4.2) and an industrial CMOS sensor (FLIR BFS-U3-89S6M). The results are shown in part D of Fig. 5, with experimental data points plotted as curves fitted to a theoretical noise model. The embodiments of the present invention observe that FFM and ANN have similar performance with enough photons: the FFM learning achieves accuracy rates of 95.5% and 96.0% on the sCMOS and CMOS sensors, respectively. In contrast, the ANN achieves accuracy rates of 94.5% and 94.0%, respectively. However, in many practical cases, the photon number is limited, such as in the case of multiple reflections or highly scattering surfaces. In these cases, the FFM learning adaptively corrects the wavefront distortion and translates the scatter propagation into a computational medium, thus requiring fewer photons for accurate classification. Specifically, the embodiments of the present invention set an accuracy rate of 94.5% (approximately 1% drop from the best accuracy rate) as a turning point, and calculate a maximum number of photons required. The ANNs for CMOS and sCMOS require 33.1 and 37.6 photons, respectively, while the FFMs for CMOS and sCMOS require only 2.10 and 1.00 photons. The embodiments of the present invention also observe that online FFM learning converges faster, enabling immediate error correction. The embodiments of the present invention also operate on rotation of the scattering phase. The system runs at two rotational speeds, labeled v1 = 1.0 degree and v2 = 2.5 degrees per iteration, respectively. Results are shown in part E in Fig. 5, at a low rotation speed, ANN eventually converges to the same accuracy as FFM, but requires a greater number of iterations. However, as the rotation speed increases from v1 to v2, the classification accuracy achieved by the Res-Net model decreases synchronously with changes of the scattering medium. In contrast, the FFM learning can continue to improve its training accuracy during the learning process.

Further, embodiments of the present invention also perform self-designing of a scalable photonic integrated circuit and perform braiding of a self-learning model-free non-Hermitian band.

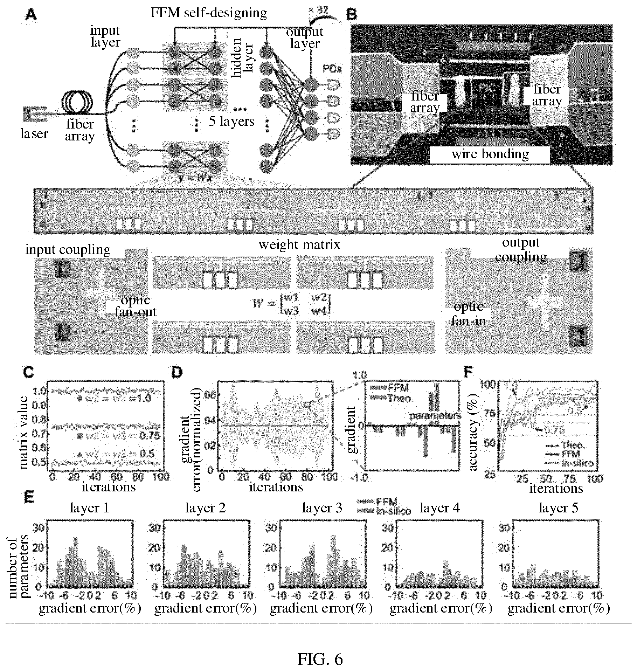

Fig. 6 shows a self-designing photonic integrated circuit. Part A of Fig. 6 is a symmetric integrated photonic neural network architecture. The bottom of part A is micrographs of symmetric core and processing unit. Part B of Fig. 6 is an experimental system. Part C of Fig. 6 is fidelity of a programmable matrix value of the symmetric core. Part D of Fig. 6 is experimental and theoretical network gradients, and an error of each level can be visualized in part E of Fig. 6. Part F of Fig. 6 shows an accuracy variation process with different symmetric core configurations. Further, as shown in Fig. 6, PD is a photodiode, PIC is a photonic integrated circuit, a.u. is an arbitrary unit. The scale bar of the figure is 1 mm.

The FFM learning method can be extended to self-design of an integrated photonic system. Par A of Fig. 6 shows an FFM learning architecture built in series and parallel configurations using the integrated symmetric photonic core. The network consists of five levels, with the number of neurons from the first level to the last level being 16, 16, 16, 8, and 8, respectively. In each level, the input data is divided into data pairs each containing two elements. These input pairs are encoded using mutually incoherent wavelengths and transmitted through the symmetric core. The resulting output is detected using a high speed photodiode, where mutually incoherent signals are combined. Thus, each core performs a matrix-vector multiplication operation. To achieve inter-layer connections, the outputs of neurons are scrambled and connected to the next layer.

The symmetry of the matrices is such that there is an equivalence between the error propagation matrix and the data propagation matrix. Thus, data and error propagations may share the same propagation direction. Part B of Fig. 6 shows an implementation of the symmetric core and an experimental test setup of a packaged chip. The symmetric core is implemented in a photonic integrated circuit (PIC) manufactured by a silicon-on-insulator (SOI) silicon photonic crystal foundry. An array of grating couplers is used to couple input light into the chip. As shown at bottom of part B in Fig. 6, each input is distributed using an on-chip beam splitter and combined using a $2 \times 1$ multi-mode interferometer (MMI). The matrix elements are realized by modulating an attenuation coefficient of a variable optical attenuator (VOA) on the chip, which is specifically realized by forward biasing the p-i-n junction by different injection current levels. The electrodes of the VOA array are wired and soldered by wire to a printed circuit board (PCB) for matrix reconstruction. Also, packaged fiber optic arrays (FAs) are used to couple light onto and out of the PIC.

The constructed neural network is used to classify standard iris data, here the input is processed as a $16 \times 1$ vector and the output represents one of three flower classes. In the process of training, the symmetric matrix is configured as one of three symmetry ratios: 1.0, 0.75, or 0.5. The fidelity of the matrix during training is visualized in part C in Fig. 6, with the time drift standard deviation of the three symmetric matrix values recorded as 0.012%, 0.012% and 0.010%, respectively. At this level of uncertainty, the embodiments of the present invention compare the experimental gradients with simulated values. As shown in part D of Fig. 6, the average deviation of the experimental gradients from the theoretical simulated values is 3.5%. An illustration example in part D in Fig. 6 shows the design gradient of the second layer in the 80th design iteration, while the errors of the whole neural network is visualized in part E in Fig. 6. In the 80th iteration, the FFM learning (theoretical training) shows gradient errors of 3.50% (5.10%), 3.58% (5.19%), 3.51% (5.24%), 3.56% (5.29%), and 3.46% (5.94%), respectively. The process of variation of design accuracy is shown in part F of Fig. 6, both the theoretical simulation and the FFM experiment require about 100 cycles to converge. With the three symmetry ratio configurations, the experimental performance is similar to the simulation, with the network converging to accuracy rates of 94.7%, 89.2%, and 89.0%. The FFM method achieves accuracy rates of 94.2%, 89.2%, and 88.7%. For comparison, theoretically designed networks exhibit experimental accuracy rates of 71.7%, 65.8%, and 55.0%.

The ability to carefully design the gain/loss in the optical system makes it possible to manipulate a non-Hermitian open system at will. Traditionally, studying a special point in the non-Hermitian system needs to first solve a numerical model. Here, the embodiments of the present invention theoretically demonstrate self-designing of a non-Hermitian system with FFM to cross the special point without the aid of a physical model. In particular, the embodiments of the present invention investigate the wave propagation in symmetric dual waveguides, in which one waveguide is used for gain and the other for loss control. In the case under investigation, although the embodiments of the present invention can detect the system by inputting the optical signal, the embodiments of the present invention do not explicitly know the construction of the Hamiltonian. In order to design the gain and loss, the embodiments of the present invention aim to break the lateral reciprocity of the system, i.e., to control the asymmetry of the output signal by feeding the input to a symmetric channel, but to maximize the output of one waveguide. It may be observed that using the FFM learning, the system output can switch from reciprocity to non-reciprocity state and vice versa. In further contrast to the knowledge of non-Hermitian optics, the embodiments of the present invention find that the switching guided by the FFM self-design is accompanied by a spontaneous parity-time symmetry (PT) broken symmetry threshold. The FFM design provides a target-oriented method that can retrieve the underlying physical quantities online, providing a new approach to solving problems in a complex system.

In summary, the present invention provides the method for free-space system and integrated optical system self-

# EP 4 557 169 A1

designing with the fully-forward-mode gradient descent. By exploiting the intrinsic parametric representation of electromagnetic wave propagation, the embodiments of the present invention establish connections between the characteristics of a universal optical system and parameters of a on-field differentiable neural network, thereby mapping the optical design process into neural network learning in a physical system. The combination of spatial symmetry and Lorentz reciprocity ensures that data propagation and error propagation occur in the same physical medium and in the same direction, for calculating the optimal direction of refractive index and gain/loss of the optical system. Thus, in the process of the design, most of the design computation can be physically performed in parallel, thereby reducing the computational burden and reducing the constraints of numerical modeling. The embodiments of the present invention demonstrate in experiments the self-design of a deep photonic neural network with millions of parameters, as well as a non-traditional imaging and processing system capable of handling complex scenes. The fully-forward-mode learning increases design speed by orders of magnitude and enables all-optical imaging and processing with resolution and photon counting limitations. Furthermore, the embodiments of the present invention demonstrate that the self-designed system can learn a non-Hermitian outlier search, whose search result is consistent with underlying physics. By enabling efficient design of the advanced optical system, the proposed fully-forward-mode should find important application in fields such as advanced machine learning, high performance imaging, and topological photonics.

The Fully-forward-mode (FFM) learning is used for free-space system and integrated optical system self-designing. The method of embodiments of the present invention introduces a learning framework that divides an optical system into a design space and a propagation space. This enables the embodiments of the present invention to convert an optical system into a parameterized on-field neural network and to achieve self-design directed to the application target. By using the spatial symmetry and Lorentz reciprocity, the necessity for backward propagation in gradient descent training is eliminated. Thus, the optical parameters, i.e. the real and imaginary parts of the refractive index, can be self-designed directly on the original physical system and only one additional reference beam is needed. The method of the embodiments of the present invention calculates the gradients based on measured output light fields of the data and error propagations. The parameters are then efficiently updated using the gradient descent algorithm. The embodiments of the present invention demonstrate the versatility of the FFM self-designing in driving different applications on free-space and integrated photonic scales, enabling a large-scale photonic neural network, high-resolution scatter imaging, a dynamic all-optic non-line-of-sight system, and a model-free outlier search in a non-Hermitian system.

In summary, the present invention utilizes a high-speed model-free photonic computation, and FFM learning can simultaneously improve the design efficiency and performance of an optical system beyond what can be achieved by an electronic computer. The embodiments of the present invention benchmark the performance of the FFM learning with other latest design methods. The FFM learning achieves high design advantages, not only building the deep large-scale photonic neural network with similar accuracy to the ideal model in experiments, but also improving the resolution of scatter imaging, approaching the diffraction limit of free-space, and further enabling parallel processing of out-of-sight objects with photon number limitations. The model-free free-space FFM learning demonstrated in the experimental results exceeds the efficiency of the optimization method by more than ten times. With the help of commercially available high-speed optical modulators and detectors, the implementation of free-space integrated FFM learning is expected to surpass the GPU accelerated learning implementation. Given the continued progress in the development of optoelectronic devices, high speed FFM self-design is expected to increase significantly in the near future, potentially reaching orders of magnitude efficiencies.

The embodiments of the present invention propose and experimentally demonstrate a method for free-space system and integrated photonic system self-designing with fully-forward-mode gradient descent. An offline designed optical system is inevitably imperfect due to prevailing noise and prevailing uncertainties in physical properties. However, the proposed self-design method mitigates the limitations of numerical modeling, speeding up generic photon computation. Currently, the revival of photonic computation mainly involves an optical stimulation electronic artificial neural network, with an optical system design performed on an electronic computer. Correcting experimental systematic errors has been a challenge and requires extensive modeling of optical propagation in space and time. This validation shows that both the free-space system and the integrated photonic system can be parameterized as one online neural network and self-designed efficiently. These findings imply that the optical system is fundamentally implementable as a differentiable and learnable neural structure, providing a new path for the model-free, high-performance self-design of the optical system and self-learning physical system, suggesting the possibility of efficient self-training of physical artificial intelligence in the late Moore's Law era.

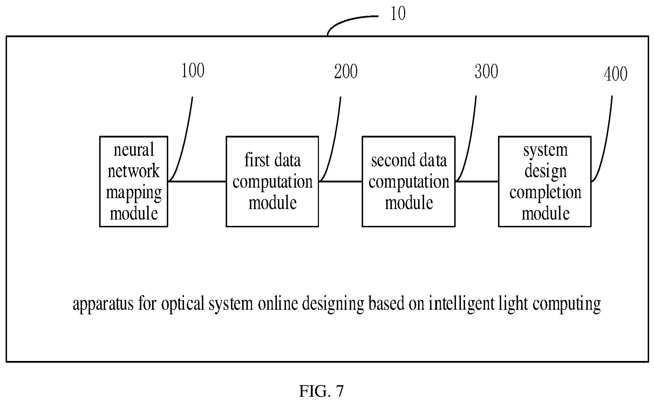

In order to implement the above-described embodiments, as shown in Fig. 7, an apparatus 10 for optical system online designing based on intelligent light computing is also provided by the embodiments. The apparatus 10 includes a neural network mapping module 100, a first data computation module 200, a second data computation module 300, and a system design completion module 400.

The neural network mapping module 100 is configured to construct an optical system based on a differentiable online neural network, and to map light propagation input data to the differentiable online neural network to obtain a network mapping result.

The first data computation module 200 is configured to train the online neural network based on the network mapping result and a fully-forward-mode, to compute first light propagation output data of the optical system.

The second data computation module 300 is configured to compute an error field according to the first light propagation output data and application target data, and to input the error field to the optical system in the fully-forward-mode to output second light propagation output data.

The system design completion module 400 is configured to compute gradient information of an online neural network parameter based on the second light propagation output data, and to update the online neural network parameter according to the gradient information to obtain a trained optical system parameter, such that the trained optical system outputs data corresponding to the application target data to enable self-designing of the optical system.

Further, the neural network mapping module 100 is further configured to construct the optical system based on a free-space optical system and an integrated photonic system. The free-space optical system and the integrated photonic system respectively include a corresponding modulation region and a propagation region.

Further, the neural network mapping module 100 is further configured to:

obtain first object data by focusing or imaging in an application target by constructing a wavefront by the free-space optical system;

obtain second target data through neuromorphic computation in the application target by the integrated photonic system; and

obtain the application target data according to the first target data and the second target data.

Further, the neural network mapping module 100 is further configured to:

map a reconfigurable modulation portion of the light propagation input data to a differentiable and modulatable weight unit in the online neural network to obtain a first mapping result;

map a light propagation portion of the light propagation input data to neuron connections between different layers in the online neural network to obtain a second mapping result; and

obtain the network mapping result of the online neural network based on the first mapping result and the second mapping result.

According to the embodiments of the present invention, the apparatus for optical system online designing based on intelligent light computing outputs the computed gradient of the light field based on data and error propagation measurement. The parameter is updated efficiently using the gradient descent algorithm. The embodiments of the present invention demonstrate the versatility of the FFM self-design method in driving different applications on free-space and integrated photonic scales, enabling a large-scale photonic neural network, high-resolution scatter imaging, a dynamic all-optic non-line-of-sight system, and a model-free outlier search in a non-Hermitian system.

In the description of the specification, reference to the terms "one embodiment," "some embodiments," "an example," "a particular example," or "some examples" or the like means that a particular feature, structure, material, or characteristic described in connection with the embodiment or example is included in at least one embodiment or example of the present invention. In the specification, illustrative expressions of such terms are not necessarily directed to the same embodiment or example. Furthermore, the particular feature, structure, material, or characteristic described may be combined in any suitable manner in any one or more embodiments or examples. Furthermore, the different embodiments or examples and the features of the different embodiments or examples described in the specification may be combined by those skilled in the art without contradiction.

Furthermore, the terms "first" and "second" are used for descriptive purposes only and are not to be understood as indicating or implying relative importance or as implying a number of indicated technical features. Thus, a feature defined with "first" and "second" may explicitly or implicitly include at least one such feature. In the description of the present invention, "a plurality of" means at least two, e.g., two, three, etc., unless explicitly specifically defined otherwise.

**Claims**

1. A method for optical system online designing based on intelligent optical computing, comprising:

constructing (S1) an optical system based on a differentiable online neural network and mapping light propagation input data to the differentiable online neural network to obtain a network mapping result;

training (S2) the online neural network based on the network mapping result and a fully-forward-mode, to compute first light propagation output data of the optical system;

computing (S3) an error field according to the first light propagation output data and application target data, and inputting the error field to the optical system in the fully-forward-mode to output second light propagation output data; and

computing (S4) gradient information of an online neural network parameter based on the second light propagation output data, and updating the online neural network parameter according to the gradient information to obtain a trained optical system parameter, such that the trained optical system outputs data corresponding to the application target data to enable self-designing of the optical system.

2. The method according to claim 1, wherein the optical system is constructed based on a free-space optical system and an integrated photonic system, wherein the free-space optical system and the integrated photonic system each comprises a corresponding modulation region and propagation region.

3. The method according to claim 2, wherein the application target data is obtained by:

obtaining first object data by focusing or imaging in an application target by constructing a wavefront by the free-space optical system;

obtaining second target data through neuromorphic computation in the application target by the integrated photonic system; and

obtaining the application target data according to the first target data and the second target data.

4. The method according to claim 3, wherein a complex refractive index of the optical system is:

$$(\text{RI}) \quad n = n_R + i n_I$$

where the RI is the complex refractive index of the optical system, $n_R$ is a real part value of the complex refractive index of the optical system, $n_I$ is an imaginary part value of the complex refractive index of the optical system, wherein the RI is kept fixed in the propagation region and the RI is electro-optically or all-optically reconstructed in the modulation region.

5. The method according to claim 3 or 4, wherein mapping the light propagation input data to the differentiable online neural network to obtain the network mapping result, comprises:

mapping a reconfigurable modulation portion of the light propagation input data to a differentiable and modulatable weight unit in the online neural network to obtain a first mapping result;

mapping a light propagation portion of the light propagation input data to neuron connections between different layers in the online neural network to obtain a second mapping result; and

obtaining the network mapping result of the online neural network based on the first mapping result and the second mapping result.

6. The method according to any one of claims 3 to 5, wherein mapping the light propagation input data to the differentiable online neural network to obtain the network mapping result, further comprises:

re-parameterizing an optical system controlled based on Maxwell's equation $\nabla \times \nabla \times -\mu_0 \epsilon_0 \omega_0^2 \epsilon_r) E = -j \mu_0 \mu_r \omega_0 J$, where E is an electric field, $J$ is a current density, $\omega_0$ is an angular frequency, $\mu_0$ is a magnetic permeability of vacuum, $\mu_r$ is a magnetic permeability of a medium, $\varepsilon_0$ is a dielectric constant in vacuum, $\varepsilon_r$ is a dielectric constant of the medium, $\nabla \times$ is a curl operator, through a real part and an imaginary part of a complex refractive index as a differentiable embedded photonic online neural network, the expression being:

$$y = W\left(n_R^{(0)}, n_I^{(0)}\right)\left(M(n_R^{(t)}, n_I^{(t)}) \cdot x\right)$$

where $x$ and $y$ are an input electric field and an output electric field, respectively, $W$ is a propagation **characterized by** a fixed refractive index $n_R^{(0)} + i n_I^{(0)}$, and $M$ is a modulation region with a modulatable refractive index

$$n_R^{(t)} + i n_I^{(t)}$$ .

7. An apparatus (10) for optical system online designing based on intelligent light computing, comprising:

a neural network mapping module (100), configured to construct an optical system based on a differentiable online neural network, and to map light propagation input data to the differentiable online neural network to obtain a network mapping result;

a first data computation module (200), configured to train the online neural network based on the network mapping result and a fully-forward-mode, to compute first light propagation output data of the optical system;

a second data computation module (300), configured to compute an error field according to the first light propagation output data and application target data, and to input the error field to the optical system in the fully-forward-mode to output second light propagation output data; and

a system design completion module (400), configured to compute gradient information of an online neural network parameter based on the second light propagation output data, and to update the online neural network parameter according to the gradient information to obtain a trained optical system parameter, such that the trained optical system outputs data corresponding to the application target data to enable self-designing of the optical system.

8. The apparatus (10) according to claim 7, wherein the neural network mapping module (100) is further configured to: construct the optical system based on a free-space optical system and an integrated photonic system, wherein the free-space optical system and the integrated photonic system respectively comprise a corresponding modulation region and a propagation region.

9. The apparatus (10) according to claim 8, wherein the neural network mapping module (100) is further configured to:

obtain first object data by focusing or imaging in an application target by constructing a wavefront by the free-space optical system;

obtain second target data through neuromorphic computation in the application target by the integrated photonic system; and

obtain the application target data according to the first target data and the second target data.

10. The apparatus (10) according to claim 9, wherein a complex refractive index of the optical system is:

$$(RI) \quad n = n_R + i n_I$$

where the RI is the complex refractive index of the optical system, $n_R$ is a real part value of the complex refractive index of the optical system, $n_I$ is an imaginary part value of the complex refractive index of the optical system, wherein the RI is kept fixed in the propagation region and the RI is electro-optically or all-optically reconstructed in the modulation region.

11. The apparatus (10) according to claim 9 or 10, wherein the neural network mapping module (100) is further configured to:

map a reconfigurable modulation portion of the light propagation input data to a differentiable and modulatable weight unit in the online neural network to obtain a first mapping result;

map a light propagation portion of the light propagation input data to neuron connections between different layers in the online neural network to obtain a second mapping result; and

obtain the network mapping result of the online neural network based on the first mapping result and the second mapping result.

12. The apparatus (10) according to any one of claims 9 to 11, wherein the neural network mapping module (100) is further configured to:

re-parameterize an optical system controlled based on Maxwell's equation $\nabla \times \nabla \times$ $-\mu_0 \epsilon_0 \omega_0^2 \epsilon_r) E = -j \mu_0 \mu_r \omega_0 J$ , where E is an electric field, $J$ is a current density, $\omega_0$ is an angular

frequency, $\mu_0$ is a magnetic permeability of vacuum, $\mu_r$ is a magnetic permeability of a medium, $\varepsilon_0$ is a dielectric constant in vacuum, $\varepsilon_r$ is a dielectric constant of the medium, $\nabla \times$ is a curl operator, through a real part and an imaginary part of a complex refractive index as a differentiable embedded photonic online neural network, the expression being:

$$y = W\left(n_R^{(0)}, n_I^{(0)}\right)\left(M(n_R^{(t)}, n_I^{(t)}) \cdot x\right)$$

where *x* and *y* are an input electric field and an output electric field, respectively, *W* is a propagation **characterized by** a fixed refractive index $n_R^{(0)} + in_I^{(0)}$, and M is a modulation region with a modulatable refractive index $n_R^{(t)} + in_I^{(t)}$.

| constructing an optical system based on a differentiable online neural network and mapping light propagation input data to the differentiable online neural network to obtain a network mapping result | S1 |

| training the online neural network based on the network mapping result and a fully-forward-mode, to compute first light propagation output data of the optical system | S2 |

| computing an error field according to the first light propagation output data and application target data, and inputting the error field to the optical system in the fully-forward-mode to output second light propagation output data | S3 |

| computing gradient information of an online neural network parameter based on the second light propagation output data, and updating the online neural network parameter according to the gradient information to obtain a trained optical system parameter, such that the trained optical system outputs data corresponding to the application target data to enable self-designing of the optical system | S4 |

FIG. 1

FIG. 2

FIG. 3

FIG. 4

FIG. 5

FIG. 6

10

| neural network mapping module | first data computation module | second data computation module | system design completion module |

100 · 200 · 300 · 400

apparatus for optical system online designing based on intelligent light computing

FIG. 7

Europäisches Patentamt

European Patent Office

Office européen des brevets

# EUROPEAN SEARCH REPORT

**Application Number**

EP 24 16 7926

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GLUCKSTAD J: "COMPACT ADAPTIVE MULTILAYER OPTOELECTRONIC NEURAL NETWORK", OPTICAL COMPUTING AND PROCESSING, 11991 1, vol. 3, no. 2, 1 April 1993 (1993-04-01), pages 95-102, XP000418810, ISSN: 0954-2264 * abstract * * Chapters 1-7; page 95 - page 102; figures 1-7 * | 1-12 | INV. G06N3/0499 G06N3/067 G06N3/09 |
| X | KOHAN ADAM ET AL: "Signal Propagation: The Framework for Learning and Inference in a Forward Pass", IEEE TRANSACTIONS ON NEURAL NETWORKS AND LEARNING SYSTEMS, IEEE, USA, vol. 35, no. 6, 27 January 2023 (2023-01-27), pages 8585-8596, XP011971836, ISSN: 2162-237X, DOI: 10.1109/TNNLS.2022.3230914 [retrieved on 2023-01-27] * abstract * * Chapters I - III; page 8585 - page 8589; figure 1 * | 1-12 | |
| A | SUI XIUBAO ET AL: "A Review of Optical Neural Networks", IEEE ACCESS, IEEE, USA, vol. 8, 13 April 2020 (2020-04-13), pages 70773-70783, XP011785619, DOI: 10.1109/ACCESS.2020.2987333 [retrieved on 2020-04-23] * abstract * * Chapters I - VI; page 70773 - page 70781; figures 1-4 * | 1-12 | TECHNICAL FIELDS SEARCHED (IPC)<br><br>G06N |

The present search report has been drawn up for all claims

| Place of search | Date of completion of the search | Examiner |
|---|---|---|
| The Hague | 19 September 2024 | Hasnas, Sergiu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)